(19) Europäisches Patentamt / European Patent Office / Office européen des brevets

(11) **EP 3 488 232 B1**

(12) **EUROPÄISCHE PATENTSCHRIFT**

(45) Veröffentlichungstag und Bekanntmachung des Hinweises auf die Patenterteilung:
**06.03.2024  Patentblatt 2024/10**

(21) Anmeldenummer: **17755067.0**

(22) Anmeldetag: **18.07.2017**

(51) Internationale Patentklassifikation (IPC):
**G01N 23/04** (2018.01)

(52) Gemeinsame Patentklassifikation (CPC):
**G01N 23/046; G01N 23/18;** G01N 23/083;
G01N 2223/1016; G01N 2223/306; G01N 2223/33;
G01N 2223/405; G01N 2223/41; G01N 2223/419;
G01N 2223/427; G01N 2223/606; G01N 2223/648;
G01N 2223/66

(86) Internationale Anmeldenummer:
**PCT/EP2017/068098**

(87) Internationale Veröffentlichungsnummer:
**WO 2018/015373 (25.01.2018 Gazette 2018/04)**

(54) **VORRICHTUNG UND VERFAHREN ZUR BERECHNUNG EINER AUFNAHMETRAJEKTORIE FÜR DIE COMPUTERTOMOGRAPHIE**

DEVICE AND METHOD FOR COMPUTING A CAPTURING TRAJECTORY FOR COMPUTER TOMOGRAPHY

DISPOSITIF ET PROCÉDÉ POUR CALCULER UNE TRAJECTOIRE D'ENREGISTREMENT POUR LA TOMODENSITOMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2016  DE 102016213403**

(43) Veröffentlichungstag der Anmeldung:
**29.05.2019  Patentblatt 2019/22**

(73) Patentinhaber:
• **Fraunhofer-Gesellschaft zur Förderung der angewandten Forschung e.V.
80686 München (DE)**
• **Julius-Maximilians-Universität Würzburg
97070 Würzburg (DE)**

(72) Erfinder:
• **SCHIELEIN, Richard
91126 Rednitzhembach (DE)**
• **HOLUB, Wolfgang
90766 Fürth (DE)**

(74) Vertreter: **Pfitzner, Hannes
Schoppe, Zimmermann, Stöckeler
Zinkler, Schenk & Partner mbB
Patentanwälte
Radlkoferstraße 2
81373 München (DE)**

(56) Entgegenhaltungen:
**WO-A1-2014/160766     DE-A1-102014 203 971
US-A- 5 073 910**

• **Andreas Fischer ET AL: "CT Rekonstruktion mit Objektspezifischen Erweiterten Trajektorien", DACH-Jahrestagung 2015, 10. Mai 2015 (2015-05-10), XP055362919, Salzburg, Austria Gefunden im Internet: URL:http://www.ndt.net/?id=18982 [gefunden am 2017-04-07]**
• **ANDREAS FISCHER ET AL: "Object Specific Trajectory Optimization for Industrial X-ray Computed Tomography", SCIENTIFIC REPORTS, Bd. 6, Nr. 1, 1. Mai 2016 (2016-05-01), XP055404799, DOI: 10.1038/srep19135**

- J Webster Stayman ET AL: "Task-Based Trajectories in Iteratively Reconstructed Interventional Cone-Beam CT", , 4. Februar 2013 (2013-02-04), XP055409208, Gefunden im Internet: URL:http://aiai.jhu.edu/papers/20130204_Fu lly3D_Abstract.pdf [gefunden am 2017-09-22]
- Markus Rehak ET AL: "Acquisition Trajectories for X-Ray Tomosynthesis Applied to Planar Samples", , 1. Januar 2010 (2010-01-01), XP055409232, Gefunden im Internet: URL:http://www.ndt.net/article/aero2010/pa pers/tu1a3.pdf [gefunden am 2017-09-22]

**Beschreibung**

Ausführungsbeispiele der vorliegenden Erfindung beziehen sich auf eine Vorrichtung sowie auf ein entsprechendes Verfahren zur Berechnung einer Aufnahmetrajektorie eines CT-Systems. Ein weiteres Ausführungsbeispiel bezieht sich auf ein entsprechendes Computerprogramm.

Die Röntgencomputertomographie (CT) erfordert einen möglichst vollständigen Datensatz von Durchstrahlungsbildern. Möglichst vollständig ist ein solcher Datensatz genau dann, wenn die auf die Aufnahme von einzelnen Röntgendurchstrahlungsbildern folgende Bilddatenverarbeitung, z.B. Rekonstruktion, eine Fragestellung aus einer Prüfaufgabe hinreichend genau beantworten kann. Eine konkrete Abfolge von Quell-, Objekt- und Detektorpositionen und Orientierungen nennt man Trajektorie.

Klassische CT Systeme begegnen dieser Aufgabe dadurch, dass eine Manipulation von Objekt oder Quelle und Detektor vorgenommen wird, mit dem Ziel eine Trajektorie zu erzeugen, die möglichst große Teile eines Kreises möglichst fein abtastet.

Ungewöhnlich große und oder komplexe Objekte einerseits sowie Bedarf nach besonders schnellen Messungen andererseits führen zur Anforderung, die für die Prüfaufgabe nötige Information schon aus deutlich weniger Durchstrahlungsbildern, unter Umständen unter eingeschränkter Zugänglichkeit des Prüfgegenstandes, zu erzielen. Die Anwendung moderner großräumiger Röntgenanlagen mit einer hohen Anzahl an Freiheitsgraden und großem Arbeitsraum bietet die Möglichkeit unkonventionelle und neuartige Trajektorien zu verwenden, welche die Materialeigenschaften und Zugänglichkeit des Prüfobjekts berücksichtigen und möglichst effizient ausnutzen. Dadurch entsteht das Problem, dass eine konkrete, optimale Trajektorie gefunden werden muss. Die Menge der möglichen Trajektorien ist sehr groß, insbesondere, wenn die Möglichkeit in Betracht gezogen wird, dass auch andere CT Parameter, wie Spannung, Filterung, Strom und Belichtungszeit Bestandteil der Trajektorie sind. Weiter kann auch die Position bzw. relative Position und Orientierung des Objekts gegenüber dem CT-System Bestandteil der Trajektorie sein. Deshalb besteht der Bedarf nach einem verbesserten Konzept.

Ein bekanntes System und Verfahren zu einer möglichst zeitsparenden Aufnahme relevanter CT-Daten ist beispielsweise in Andreas Fischer ET AL: "CT Rekonstruktion mit Objektspezifischen Erweiterten Trajektorien", DACH-Jahrestagung 2015, 10. Mai 2015 offenbart.

Aufgabe der vorliegenden Erfindung ist es, ein Konzept zu schaffen, das die Aufnahmetrajektorie eines CT-Systems derart optimiert, dass die Anzahl der Aufnahmen reduziert wird und dennoch der mittels der Aufnahmen ermittelte Datensatz ausreichend ist, um die Prüfaufgabe zu erfüllen.

Die Aufgabe wird durch die unabhängigen Patentansprüche gelöst.

Ausführungsbeispiele der vorliegenden Erfindung schaffen eine Berechnungseinheit zur Berechnung einer Aufnahmetrajektorie eines CT-Systems. Die Berechnungseinheit umfasst eine Empfangsschnittstelle, einen Optimierer sowie eine Steuereinheit. Die Empfangsschnittstelle dient zum Empfangen von Messdaten, wie z. B. von Zwischenbildern oder schon berechneten Objektdaten, oder von Simulationsdaten bezüglich des aufzunehmenden Objekts, d. h. beispielsweise von einer Röntgensimulation (welche z.B. auf CAD-Daten des aufzunehmenden Objekts basiert). Die Optimier ist ausgebildet, um ausgehend von den bekannten Freiheitsgraden des CT-Systems (Rotations-CT-System oder Helix-CT-System oder auch CT-System mit einer großen Anzahl an Freiheitsgraden), ausgehend von den oben erläuterten Mess- und/oder Simulationsdaten und ausgehend von einer Prüfaufgabe, die abzufahrende Aufnahmetrajektorie zu bestimmen. Die Prüfaufgabe stammt aus einer Gruppe umfassend eine Mehrzahl von Prüfaufgaben, wie z. B. Volumenmodell erstellen, Oberflächenmodell erstellen oder Fehlstellen detektieren. Ausgehend von der ermittelten Aufnahmetrajektorie werden nun Daten entsprechend Selbiger ausgegeben, die zur Steuerung einer Manipulationseinheit (z.B. mit ein oder mehreren Aktoren / Robotern) des Computertomographiesystems dienen. Dies können entweder Steuerdaten sein oder allgemein Daten, die die Position beschreiben und die dann von der Steuerung angefahren werden.

Der Erfindung liegt also die Erkenntnis zugrunde, dass bei Röntgenaufnahmesystemen bzw. CT-Systemen, die in der Lage sind, 2D-, 3D- oder 4D- (3D + Zeit) Informationen eines Objekts zu erfassen, die Trajektorie oder allgemein die abzufahrenden Positionen unter Kenntnis der konkreten Prüfaufgabe und unter Kenntnis des Prüfobjekts dahin gehend optimiert werden kann, dass die Anzahl der einzelnen Aufnahmen und damit auch der anzufahrenden Positionen reduziert wird. Hintergrund hierzu ist, dass jede Aufgabe, wie z. B. die Detektion von Oberflächengeometrie im Vergleich zu der Detektion eines Volumenmodells, die Randbedingungen für die Trajektorie aber auch für die Aufnahmeparameter, wie z. B. Röntgenspannung oder Belichtungszeit, vorbestimmt. Einen weiteren Einfluss hat oder kann das Objekt an sich haben. In der Regel ist es nämlich so, dass umso einfacher das Objekt und umso einfacher die Prüfaufgabe (Oberflächenbestimmung) ist, desto mehr kann die Anzahl der Aufnahmen auf der Trajektorie reduziert werden. Die angefahrenen Winkel im Raum sollten jedoch ausreichend auf der Bewegungsbahn (Trajektorie) verteilte sein. Wenn die Prüfaufgabe (z.B. Erkennung von Lunkern) und die Geometrie des Prüfobjekts sehr komplex sind, sollte im Regelfall auch die Anzahl der anzufahrenden Winkel im Raum gesteigert werden, so dass eine genügend große Auflösung in dem Volumenmodell erzielt werden kann.

Eben an dieser Stelle greift das verbesserte Konzept an, indem es vor oder während der eigentlichen Aufnahme das Prüfobjekt in seinen Grundzügen analysiert, um beispielsweise dessen Geometrie zu erkennen und in Abhängigkeit von dem gewählten Aufnahmemodus dann die Trajektorie bestimmt. Im Ergebnis definiert der Optimierer diejenige Trajektorie (d. h. diejenige Abfolge aus Position und Orientierungen der Manipulatoren), so dass - unter Umständen mit möglichst wenig Einzelbildern ein Bild mit optimaler oder für eine Aufgabenstellung hinreichender Qualität entsteht. Dies hat den Vorteil, dass eine optimale Bildqualität mit einem Mindestmaß an Röntgenprojektionen und damit mit einer somit sehr kurzen Messdauer erreicht werden kann. Somit wird jede Messung hinreichend für die jeweilig gegebene Prüfaufgabe beschleunigt.

Entsprechend Ausführungsbeispielen dienen als Mess- und/oder Simulationsdaten während der Messung generierte Interimsdaten, die ausreichend gut sind, um die Randbedingung des Objektes (z. B. Hinterschneidungen oder stark variierende Oberfläche, wie z. B. bei einem Kühlkörper) zu identifizieren, oder ein Geometrieoder Volumenmodell, welche beispielsweise aus den CAD-Daten abgeleitet sind. Bei einem Ausführungsbeispiel mit dem in Real Time ermittelten Modell können entweder die Zwischenbilder oder auch die von der Bildverarbeitung ausgegebenen Interimsdaten (z.B. Voxelmodell, welches beispielsweise noch nicht fertig rekonstruiert ist bzw. bei welchem die Datenbasis noch nicht final vorliegt, oder Zwischenbilder, d.h. 2D-Daten) aber auch der teilweise (entsprechende Aufgabe) aufgebaute Datensatz als Eingangsgröße für die Berechnung der Trajektorie dienen.

Entsprechend Ausführungsbeispielen weist die Berechnungseinheit eine Benutzerschnittstelle auf, über welche die jeweilige Prüfaufgabe festgelegt werden kann. Hierbei kann beispielsweise zwischen drei Grundprüfaufgaben unterschieden werden. Eine erste Prüfaufgabe bezieht sich auf das Ermitteln einer geometrischen Struktur und/oder einer geometrischen Oberflächenstruktur. Bei dieser Prüfaufgabe wird die Aufnahmetrajektorie bzw. die Einstellungen des CT-Systems so gewählt, dass hochfrequente Merkmale des aufzunehmenden Objekts gut abtastbar sind und insbesondere große Gradienten, wie sie beispielsweise aus Kanten herrühren, bei der Aufnahme des aufzunehmenden Objekts detektierbar sind. Eine zweite Prüfaufgabe entsprechend einem weiteren Ausführungsbeispiel bezieht sich auf die Detektion von Schwächungskoeffizienten über das Volumen des aufzunehmenden Objekts hinweg. Hier sind Anforderungen an die Aufnahme und damit auch an die Aufnahmetrajektorie höher. Der Schwächungskoeffizient kann als Materialeigenschaft gesehen werden, die in Kombination mit zusätzlichem Wissen (z.B. Materialdichte) ein Rückschluss auf das Material zulässt. Insofern sind im Regelfall längere Aufnahme- bzw. Belichtungsdauern und auch eine höhere Anzahl an Winkeln im Raum vonnöten. Eine weitere Prüfaufgabe entsprechend einem Ausführungsbeispiel bezieht sich auf das Ermitteln von Abweichungen, wie z. B. von Fehlern oder Lunkern, im Volumen des aufzunehmenden Objekts.

Hier ist nicht nur notwendig, dass die Dichte im Volumen gut detektierbar ist, sondern vor allem auch die Dichte und die Dichtenänderungen sehr gut aufgelöst sind. Hierbei kann die Aufnahmetrajektorie dann auch so gewählt werden, dass auf einzelne Bereiche, die auf eine lokale Dichtenvariation hindeuten, gezoomt wird. Es wäre entsprechend Ausführungsbeispielen auch denkbar, dass bei derartigen Bereichen eine sukzessive Verbesserung angestrebt wird. Auch wäre das Abfahren eines Fibonacci-Gitters auf einer Kugeloberfläche möglich. Auch wäre das Abfahren einer Trajektorie mit veränderlicher Vergrößerung möglich.

Entsprechend weiteren Ausführungsbeispielen könnte die Aufnahmetrajektorie auch derart gewählt sein, dass Kollisionen, wie z. B. mit dem Objekt oder mit der Prüfumgebung vermieden werden. Dies ist deshalb möglich, da nun nach Kenntnis des Objekts ausgehend von den vorab ermittelten Mess- oder Simulationsdaten der Freiraum hinreichend gut bekannt ist.

Entsprechend weiteren Ausführungsbeispielen kann der Optimierer auch ausgebildet sein, je Position auf der Aufnahmetrajektorie die Aufnahmeparameter vorzugeben bzw. um genauer zu sein, zu variieren. Wenn das Objekt beispielsweise in der einen Raumrichtung eine unterschiedliche, z. B. dünnere, Längenausdehnung hat als in die andere Raumrichtung, kann einmal eine kurze Belichtungszeit gewählt werden bzw. ausreichend sein, während dann bei der längeren Längenausdehnung die Belichtungszeit für diesen Winkel im Raum entsprechend vergrößert werden muss. Bei den Aufnahmeparametern wird nicht nur die Belichtungszeit, sondern auch die Röntgenspannung, der Röntgenstrom oder eine Röntgenfilterung angepasst.

Entsprechend einem weiteren Ausführungsbeispiel können auch die Korrekturdaten je Winkel im Raum variieren und deshalb vorteilhafterweise zusätzlich zu den jeweiligen Positionen auf der Aufnahmetrajektorie gespeichert sein. Bei den Korrekturdaten handelt es sich im Wesentlichen um die sogenannten Hellbilder, ausgehend von welchen eine Kalibrierung stattfindet. Sollte für nicht jede Position auf der Aufnahmetrajektorie ein derartiges Hellbild vorhanden sein, kann dieses ausgehend von den benachbarten Positionen bestimmt bzw. simuliert werden.

Ein weiteres Ausführungsbeispiel bezieht sich auf ein CT-System mit einem Optimierer, wie er oben charakterisiert ist.

Ein weiteres Ausführungsbeispiel schafft ein entsprechendes Verfahren mit den Schritten Empfangen von Mess- und Simulationsdaten, Bestimmen der Aufnahmetrajektorie und Ausgeben der Daten zur Steuerung der Manipulationseinheit.

Entsprechend einem weiteren Ausführungsbeispiel kann ein Computerprogramm zur Durchführung des Verfahrens zum Einsatz kommen.

Weiterbildungen sind in den Unteransprüchen definiert. Ausführungsbeispiele der vorliegenden Erfindung werden nachfolgend anhand der beiliegenden Zeichnungen erläutert. Es zeigen:

Fig. 1a     ein schematisches Blockschaltbild einer Berechnungseinheit mit einem Optimierer gemäß einem Basisausführungsbeispiel;

Fig. 1b     ein schematisches Flussdiagramm des Verfahrens bei der Berechnung und Aufnahmetrajektorie gemäß dem Basisausführungsbeispiel;

Fig. 1c     ein schematisches Blockschaltbild einer erweiterten Berechnungseinheit;

Fig. 2     einige Kombinationen von Prüfaufgabe, Prüfobjekt und entsprechender Aufnahmetrajektorie gemäß einem Ausführungsbeispiel; und

Fig. 3     ein CT-System gemäß einem weiteren Ausführungsbeispiel.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

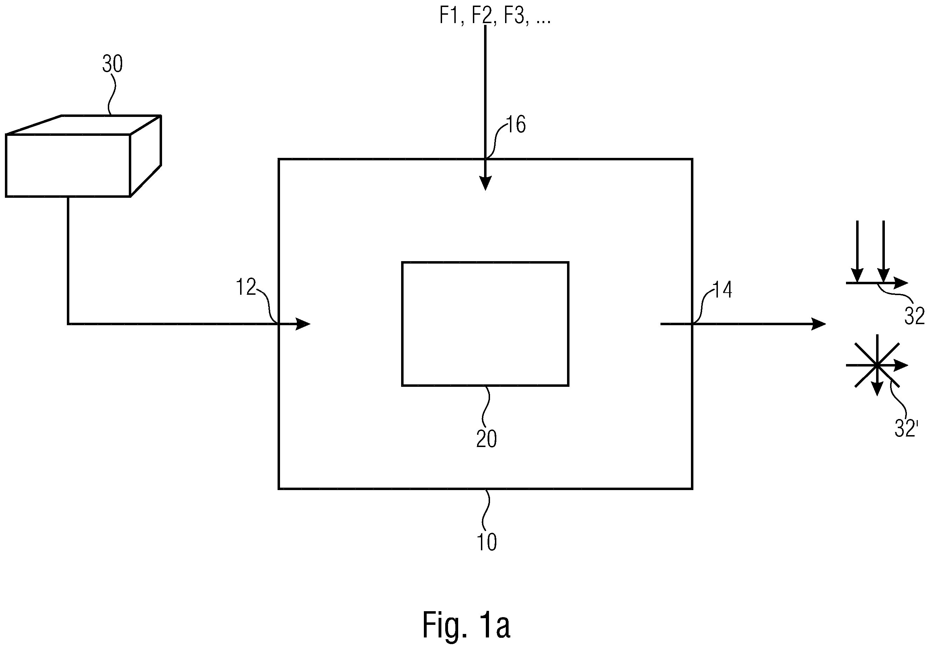

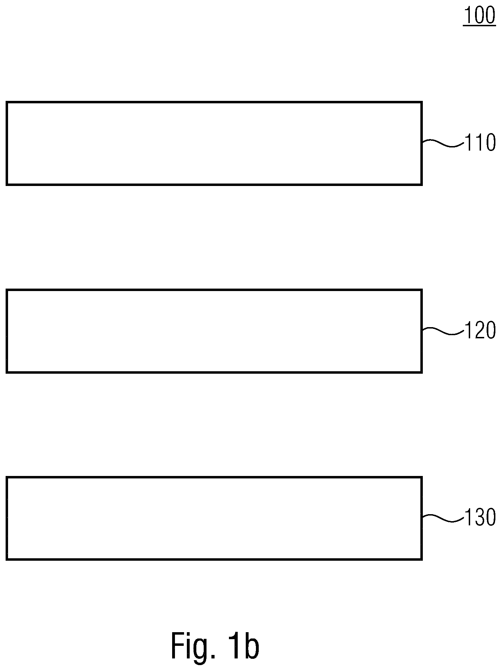

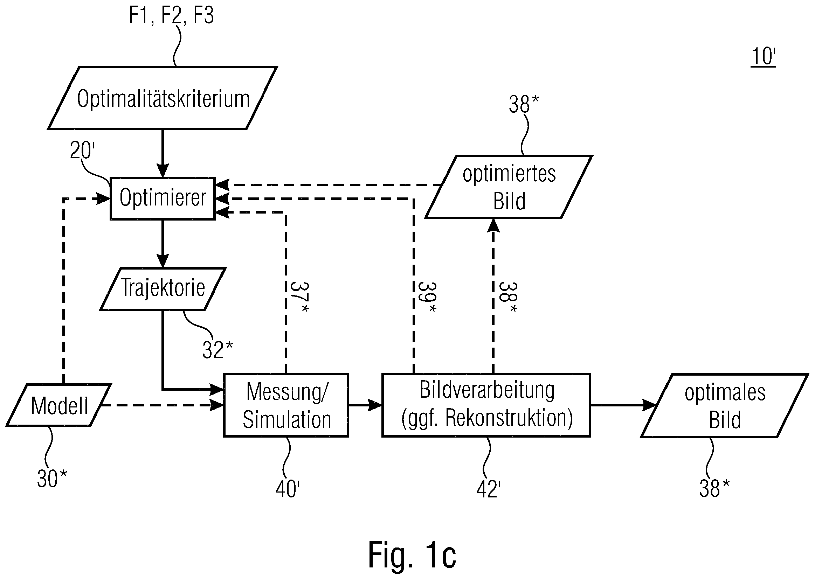

Fig. 1 zeigt eine Berechnungseinheit 10 zur Berechnung einer Aufnahmetrajektorie eines CT-Systems. Die Berechnungseinheit umfasst die Umfangsschnittstelle 12, den Optimierer 20 sowie eine Steuereinheit 14. Des Weiteren weist die Berechnungseinheit in diesem Ausführungsbeispiel eine Schnittstelle 16 zum Empfangen einer aktuellen Aufnahmesituation (z.B. Lage/Orientierung des Objekts) auf.

Über die Schnittstelle 12 werden Mess- und/oder Simulationsdaten bezüglich des aufzunehmenden Objekts erhalten. Hier sind es die Simulationsdaten aus einer Röntgensimulation zu dem Aufnahmeobjekt 30, wobei die Röntgensimulation beispielsweise auf CAD-Daten zu dem Aufnahmeobjekt 30 aufsetzen kann. In dem durchgeführten Verfahren 100, wie es in Fig. 1b dargestellt ist, entspricht dieses Empfangen der Mess- und/oder Simulationsdaten dem Schritt 110. Diese Daten werden dann durch den Optimierer analysiert und in Kombination mit dem entsprechenden Fall (vgl. Bezugszeichen F1 bis F3), welcher über die Benutzerschnittstelle 16 erhalten wird, derart verarbeitet, dass die Aufnahmetrajektorie 32 bestimmt wird. Dieser Schritt entspricht in dem Verfahren 100 dem Schritt 120.

Beispielsweise können bei dem hier dargestellten würfelförmigen Objekt 30 und bei der exemplarischen Prüfaufgabe F1 das "Ermittelns einer Oberflächenstruktur" die Zahl und die Positionen auf der Aufnahmetrajektorie 32 derart reduziert werden, dass beispielsweise nur vier oder geringfügig mehr Aufnahmen entlang der Seitenflächen des viereckigen Würfels 30 aufgenommen werden müssen, um hierdurch dann gute Gradientenbilder, die auf die Kanten hindeuten, zu bestimmen.

Diese entsprechenden Positionen auf der Aufnahmetrajektorie bzw. allgemein die errechnete Aufnahmetrajektorie 32 werden dann über die Steuereinheit 14, entweder eine einfache Schnittstelle zur Ausgabe der entsprechenden Aufnahmetrajektorien-Daten oder eine Steuerschnittstelle, ausgegeben. Dies entspricht in Bezug auf das Verfahren 100 dem Schritt 130.

Entsprechend der alternativen oder additiven Prüfaufgabe F3 "Detektion von Fehlstellen" könnte aber auch die Aufnahmetrajektorie 32' so bestimmt werden, dass eine Vielzahl von Positionen entlang der Aufnahmetrajektorie 32' aufgenommen werden, um bei dem würfelförmigen Objekt 30 ein ausreichend detailliertes Voxelmodell ermitteln zu können, in welchem Unregelmäßigkeiten bei der Dichtenverteilung erkennbar sind.

Die entsprechend einem weiteren Ausführungsbeispiel vorgegebene alternative oder additive Prüfaufgabe F2 "Ermitteln eines Volumendatensatzes" (mit dem Ziel der Materialerkennung) würde ausgehend von dem würfelförmigen Prüfkörper 30 nicht eine derart detaillierte Datenbasis, wie beispielsweise bei der Prüfaufgabe F3 erfordern, jedoch dennoch mehr Detailgrad als bei der Prüfaufgabe F1.

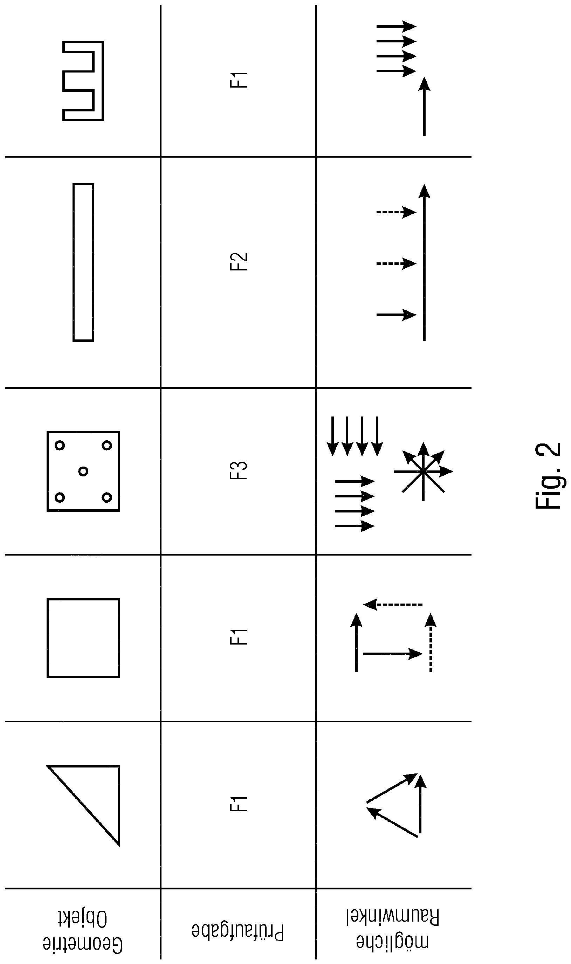

An dieser Stelle sei angemerkt, dass der Einfluss der Geometrie oder allgemein des Prüfkörpers 30 im Hinblick auf Fig. 2 im Detail erläutert wird.

Im Resultat ermöglicht die Vorrichtung 10 die im Stand der Technik vorherrschenden Unzulänglichkeiten bezüglich der Bestimmung der Aufnahmetrajektorie zu reduzieren bzw. zu beseitigen, um so ein gutes Prüfergebnis bzw. eine geforderte Bildqualität zu erreichen. Unter Bild wird hier eine Menge (oder ein Teil davon) an ortsaufgelösten Informationen, die über das Prüfobjekt bestehen (CT-Volumen, Fehlerliste, Kantenbild, Oberflächenmesh, ...) verstanden.

Bezug nehmend auf Fig. 1c wird ein weiteres Ausführungsbeispiel einer Vorrichtung 10' mit einem Optimierer 20' erläutert.

Auch wenn es strenggenommen nicht Teil der Berechnungsvorrichtung 10' ist, wir bei dem vorliegenden Ausführungsbeispiel davon ausgegangen, dass eine Einheit zur Messung und Simulation 40' als auch eine Bildverarbeitungseinheit 42' vorgesehen, die im Regelfall Teil des CT-Systems sind. Die Einheit zur Messung und Simulation 40' erhält die Aufnahmetrajektorie 32* und steuert ausgehend hiervon das CT-System. Der der Messung und Simulation nachgeschaltete Block 42 erhält aus der Messung und Simulation die entsprechenden Zwischenbilder 37* zur Rekonstruktion. Hieraus kann entweder ein Rohdatensatz (Voxelmodell, vgl. Bezugszeichen 37*) oder gleich ein optimiertes Bild 38* herausgegeben werden. Hierbei sei nochmals angemerkt, dass unter dem optimierten Bild nicht nur die Oberflächengeometrie, das Volumenmodell, sondern auch eine Liste mit Positionen von Fehlstellen oder mit anderen Informationen verstanden werden kann. Hierbei sei angemerkt, dass das optimierte Bild 38* insbesondere an die Ausgabeschnittstelle des CT-Systems ausgegeben wird, aber auch an den Optimierer 20' ausgegeben werden kann, der ausgehend hiervon seine Trajektorie 32* berechnet.

Bei nachfolgender Diskussion wird davon ausgegangen, dass zu der Prüfaufgabe F1 Die Trajektorie 32*1 gehört, während zu der Prüfaufgabe F2 die Trajektorie 32*2 gehört und zu der Prüfaufgabe F3 die Trajektorie 32*3.

Der Optimierer' 20' kann sich unter Umständen auf ein vorgegebenes oder während der Messung generiertes, optimales oder nicht optimales Modell 30' (Vorwissen, CAD, Oberflächenmodell) des Prüfgegenstandes und/oder des Aufbaus und der Manipulatoren der Prüfanlage beziehen um die Aufnahmetrajektorie 32* bezüglich Informationen wie beispiels-weise Objektgeometrie, Zugänglichkeit, Material und Struktur zu optimieren.

Der Optimierer 20' kann hinsichtlich unterschiedlicher Arten der zu erreichenden Bildgüte unterschiedliche Trajektorien 32*1, 32*2, 32*3 generieren. Diese Arten der Bildgüte können beispielsweise umfassen:

Prüfaufgabe F1: Ein optimales Bild 38* hinsichtlich der Beschreibung der Struktur und Oberflächen des Prüfgegenstandes (hochfrequente Merkmale, Gradienten im Bild; Anwendung beispielsweise in der Metrologie).

Prüfaufgabe F2: eine physikalisch korrekte Repräsentation des Objekts in Form möglichst korrekt bestimmbarer Materialeigenschaften (Schwächungskoeffizienten, Material und Dichte) über das gesamte Messvolumen bei vorgegebener Detailerkennbarkeit (Auflösung und Kontrast).

Prüfaufgabe F3: eine hinreichend zuverlässige Darstellung unbekannter oder zu erwartender Abweichungen im Objekt von dem optimalen oder nicht optimalen Modell. Der Optimierer kann dabei, abhängig von der Problemstellung direkt die optimale Trajektorie bestimmen, oder diese während der Messung sukzessive verändern bis die Optimalität erreicht ist.

Unter Trajektorie 32*1 - 32*3 wird hier die Folge von Positionen und Orientierungen von einer oder mehreren Röntgenröhren, einem oder mehreren Röntgendetektoren und einem oder mehreren Objekten über ein gemeinsames oder mehrere unabhängige Positioniersysteme verstanden. Die Trajektorie kann die Parameter der Röntgenquelle und des Detektors enthalten (Spannung, Filterung, Strom, Belichtungszeit).

Der Optimierer 20' optimiert und definiert die Trajektorie 32*1 - 32*3 hinsichtlich des verwendeten Optimalitätskriteriums 1), 2) oder 3), nötigenfalls iterativ. Dazu verwendet der Optimierer eine oder mehrere Informationen, nämlich das optimale oder nicht optimale Modell 30', das Ergebnis oder Zwischenergebnis der iterativen Optimierung ("optimiertes Bild 38*"), das Ergebnis oder Zwischenergebnis einer einzelnen Röntgenaufnahme (vgl. 37*) und das Ergebnis oder Zwischenergebnis einer Bildverarbeitung (vgl. 39*). Dabei kann das Ergebnis oder Zwischenergebnis einer Röntgenaufnahme auch durch eine Röntgensimulation statt durch Messung entstanden sein. Die Zusammenhänge sind in Fig. 1c verdeutlicht.

Obwohl beim obigen Ausführungsbeispiel immer nur auf die Prüfaufgaben F1 bis F3 eingegangen wurde, sei an dieser Stelle darauf hingewiesen, dass es auch weitere Prüfaufgaben oder Abwandlungen der Prüfaufgaben F1 bis F3 geben kann.

Da über die Prüfaufgaben F1 bis F3 hinaus auch noch das zu untersuchende Objekt eine Rolle spielt, wird nachfolgend Bezug nehmend auf die Tabelle aus Fig. 2 erläutert, inwieweit das Prüfobjekt Einfluss auf die Aufnahmetrajektorie hat.

Die Tabelle aus Fig. 2 zeigt insgesamt vier Spalten mit vier Prüfobjekten und vier zugehörigen Prüfaufgaben. In der ersten Spalte soll ein dreieckiges Prüfobjekt entsprechend der Prüfaufgabe F1 "Erkennung der Oberflächenstruktur" erkannt werden. In Spalten 2 und 3 soll jeweils ein rechteckiges Objekt einmal mit der Prüfaufgabe F1 "Erkennung von Oberflächenstrukturen" (Spalte 2) und einmal mit der Prüfaufgabe F3 "Erkennung von Fehlstellen" (Spalte 3) untersucht werden. In der vierten Spalte soll ein flaches Element, wie z. B. eine Scheibe ausgehend von Prüfaufgabe F2 "Erkennung eines Volumenmodells" untersucht werden. In Spalte fünf wird von einem Körper mit Hinterschneidungen, z.B. Kühlkörper, ausgehangen, dessen Oberfläche abgetastet werden soll (F1).

Bei dem Fall von Spalte 1 wird ersichtlich, dass es am vorteilhaftesten ist, wenn zumindest drei Winkel im Raum, nämlich die Winkel im Raum parallel zu den Schenkeln des dreieckigen Objekts untersucht werden. Hierbei sind auch die entsprechenden Röntgenparameter (Röntgenspannung, usw.) so zu wählen, dass die Kanten bzw. die entstehenden Gradienten an den Kanten gut detektierbar sind.

Bei Prüfaufgabe aus der zweiten Spalte dürfte es im Wesentlichen ausreichen, wenn die Trajektorie so gewählt ist, dass um etwa 90° oder um 92° zueinander versetzte Winkel im Raum (allgemeine Winkel im Bereich zwischen 85° und 100°, bevorzugt größer 90°) auf die Trajektorie angefahren werden, um die Oberflächendetektion zu ermöglichen. Zur Sicherheit können die gestrichelt dargestellten weiteren zwei Winkel im Raum auch noch angefahren werden, um hier eine Verifikation zu ermöglichen.

Ausgehend von dem Ausführungsbeispiel, dass die Zwischenbilder bei der Trajektorienbestimmung mit berücksichtigt werden, könnte man sich den Fall vorstellen, dass bei der ersten Durchstrahlung eine Schrägdurchstrahlung (vgl. gepunktete Linie) erfolgt, so dass es bei Variationen (ausgehend von diesem ersten Durchstrahlungswinkel, z.B. um jeweils 90°) zu einer Fehlmessung kommen würde. Allerdings ist in dieser Schrägdurchstrahlung kein scharfer Gradient zu erkennen, so dass dann für den zweiten Winkel im Raum ein entsprechender Winkel im Raum gesucht wird, der einen ausreichend hohen Gradienten bietet, so dass man dann zu den zwei bzw. vier optimalen Winkeln im Raum gelangt.

Bei dem Ausführungsbeispiel aus der dritten Spalte handelt es sich um das gleiche Objekt wie aus der zweiten Spalte, jedoch um eine andere Prüfaufgabe. Hier ist es sinnvoll, die Durchstrahlungsparameter derart einzustellen, dass eine gute Ortsauflösung bei den Abschwächungsbildern, welche einen Rückschluss auf die Materialdichte zulassen, erreicht wird. Hierzu werden dann beispielsweise entweder eine Vielzahl von parallelen Aufnahmen und einer weiteren Vielzahl von um 90° versetzten parallelen Aufnahmen durchgeführt oder der Würfel in einer hohen Anzahl an unterschiedlichen Winkeln im Raum um die 360°-Achse durchstrahlt.

Bei dem Ausführungsbeispiel aus Spalte 4 handelt es sich um eine Fläche, bei welcher die Dichte über das gesamte Objektvolumen bestimmt werden soll. Schon alleine bei dem Durchstrahlungsweg parallel zu der Fläche wird deutlich, dass hier sehr viel Volumen durchstrahlt werden muss, was, um eine ausreichende Genauigkeit zu erreichen, erheblich lange Belichtungszeiten voraussetzt. Umgekehrt ist bei der Querdurchstrahlung (durch die dünne Ebene) es nicht notwendig mit so langen Belichtungszeiten zu arbeiten, so dass hier die Belichtungszeit entsprechend reduziert werden kann. Anderenfalls kann es aber hier erforderlich sein, dass einige parallele Aufnahmen genommen werden müssen, da ggf. der Strahlengang zwischen Strahlenquelle und Röntgendetektor es nicht zulässt, dass die gesamte Fläche durchstrahlt wird. Dies ist mit dem zusätzlichen gepunkteten Pfeil in der Zeile "mögliche Winkel im Raum" gekennzeichnet. Bei der Festlegung der anzufahrenden Winkel im Raum spielt auch die Orientierung des Objekts im Raum eine entscheidende Rolle, da beispielsweise der Kühlkörper gut von der Seite (d.h. in Querrichtung zu den Kühlrippen), aber schlecht von oben oder unten abtastbar ist.

Bei dem Fall von Spalte 1 werden im Wesentlichen dieselben Winkel im Raum wie bei Spalte 2 angefahren, wobei jedoch aufgrund der Hinterschneidungen bzw. Ausnehmungen zusätzlich von der Oberfläche derselben weiter parallele (versetzte) Messungen durchführt werden. Bei "echten" Hinterschneidungen, die von keiner Seite "ausleuchtbar sind, wäre der Abtastgrad so zu steigern, dass diese Hinterschneidungen in einem Volumenmodell erkennbar wären (vgl. Bsp. aus Spalte 3).

Nachfolgend werden weitere mögliche Varianten für Trajektorien bzw. Einflussparameter auf die Trajektorie erläutert.

Entsprechend einem Ausführungsbeispiel können auch ungewöhnliche Trajektorien, z. B. beim Hineinzoomen in dem Beispiel aus Spalte 3 angefahren werden. Die beanspruchten Klassen von Röntgen-Aufnahmetrajektorien umfassen beispielsweise sukzessive verbessernde Aufnahmetrajektorien (beispielsweise Fibonacci-Gitter auf der Kugeloberfläche), Abtastungen konstanter Vergrößerung mit Trajektorien auf Kugeloberflächen, Trajektorien bei denen Röntgen-Quelle, -Detektor und Objekt nicht auf einer Geraden liegen oder die Röntgen-Quelle nicht auf der Normalen des Röntgendetektors in dessen Bildmitte liegt und insbesondere Trajektorien zur Abtastung des Objekts mit varianter Vergrößerung, das heißt mit veränderlichen Abständen von Röntgen-Quelle und -Detektor zum Objekt. Der veränderliche Abstand dient dazu, um eine veränderliche Vergrößerung M eines Ausschnitts des Reproduktionsobjekts unter Ausnutzung folgender Gesetzmäßigkeiten zu erreichen:

$$M = QDD / QOD,$$

wobei M die geometrische Vergrößerung, QDD die Quell-Detektor-Distanz und QOD die Quell-Objekt-Distanz ist.

Entsprechend einem weiteren Ausführungsbeispiel können die Trajektorien hinsichtlich unterschieder Randbedingungen des real implementierten Aufnahme- oder Manipulationssystems optimiert werden. Dies kann beispielsweise umfassen: Vermeidung von Kollisionen mit dem Objekt, mit dem Manipulationssystem selbst, mit dem Raum oder mit Personen im Arbeitsraum, die Berücksichtigung erreichbarer, nicht erreichbarer oder eingeschränkt erreichbarer Stellungen im Arbeitsraum des Manipulationssystems, unterschiedliche vom Manipulationssystem erzielbare Präzision an unterschiedlichen Stellen im Arbeitsraum, bei unterschiedlichen Verfahrgeschwindigkeiten, unterschiedlichen Bewegungsrichtungen oder unterschiedlichen Veränderungen der Bewegungsrichtung, oder - geschwindigkeit. Damit ist insbesondere gemeint, dass solche Trajektorien entstehen, die die gesamte Zeit die für eine Messung benötigt wird minimieren.

Entsprechend einem weiteren Ausführungsbeispiel können parallel zu den Trajektorien auch die Parameterbelichtungszeit, Strom, Spannung und Filterung als Bestandteil einer Trajektorienoptimierung optimiert werden. Dadurch wird das Tupel aus diesen Parametern für die gesamte Messung oder für jede Röntgenaufnahme einzeln optimal bestimmt.

Entsprechend einem weiteren Ausführungsbeispiel wäre es auch denkbar, die Hellbilder zu einer optimierten Trajektorie zu bestimmen, ohne dafür die Hellbilder bei einer Leerfahrt der Trajektorie zu messen.

Hellbilder sind die zur Korrektur inhomogener Detektoreigenschaften und - ausleuchtungen notwendigen Detektorbilder ohne irgendein Objekt im Strahlengang. Sind die relative Position und Orientierung von Röntgenquelle zu -detektor oder die Röntgenparameter wie Belichtungszeit, Strom, Spannung, Filterung über eine Messung nicht konstant, so sind auch diese Korrekturbilder nicht konstant und durch Messung nur entsprechend aufwändig zu bestimmen. Der veränderliche Teil dieser Hellbilder wird entweder aus dem zuvor aufgenommenen Strahlungsfeld der Röntgenröhre errechnet oder mittels Röntgensimulation der Aufnahmegeometrie und -parameter geschätzt.

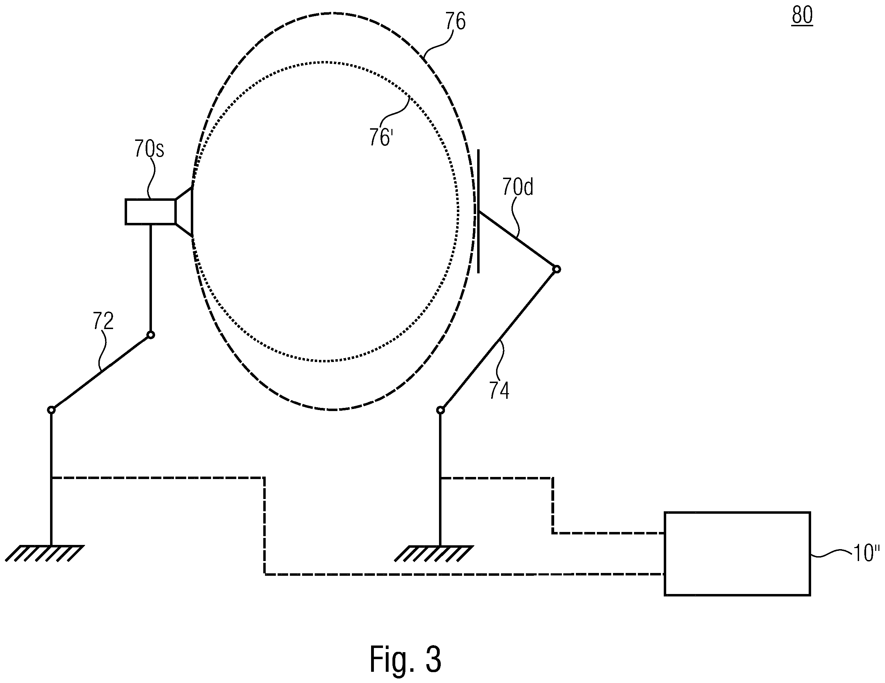

Nachfolgend wird Bezug nehmend auf Fig. 3 ein Computertomographiesystem 80 basierend auf Robotern 72 und 74 erläutert.

Fig. 3a zeigt ein mögliches Computertomographiesystem 80, bei dem die Röntgenstrahlungsquelle 70s auf einem ersten Roboter 72 angeordnet ist, während der Strahlendetektor 70d auf einem zweiten Roboter 74 vorgesehen ist. Durch diese zwei Roboter 72 und 74 sind Röntgenstrahlungsquelle 70s und Strahlendetektor 70d beliebig im Raum variierbar. Beispielsweise können die beiden Elemente 70s und 70d auf der Trajektorie 76, hier einer Kreisbahn, verfahren werden, so dass entlang dieser Kreisbahn die entsprechenden Winkel im Raum abfahrbar sind. Der Radius der Kreisbahn kann, wie hier anhand der gestrichelten Linie 76' dargestellt, verkleinert werden, um beispielsweise eine höhere Ortsauflösung zu erreichen. Hierbei sei angemerkt, dass die unterschiedlichen Positionen nicht auf ein und derselben Kreisbahn, d.h. nicht in einer gemeinsamen Ebene liegen müssen, sondern beliebig im Raum um das Objekt verteilt sein können (was eben das CT-System 80 mit seien zwei Robotern 72 und 74 vorteilhafterweise ermöglicht). In anderen Worten ausgedrückt heißt das, dass die Trajektorien durch beliebige, von den Robotern 72 und 74 anfahrbare Positionen definiert sind.

Entsprechend einem weiteren Ausführungsbeispiel wird das Computertomographiesystem 80 mit der Berechnungseinheit 10", den Robotern 72 und 74 sowie den Modulen der Röntgeneinheit 70s und 70d geschaffen.

Entsprechend einem weiteren Ausführungsbeispiel kann das Objekt, welches untersucht werden soll, durch einen weiteren Roboter gehalten sein, dessen Bewegungsfreiheit zur Realisierung einer Trajektorie genutzt werden kann. Insofern ist es auch denkbar, dass das CT-System mehr als 2 Roboter umfasst.

Oben erläuterte Ausführungsbeispiele ermöglichen mittels unkonventioneller, optimierter Trajektorien mit gegebenenfalls veränderlichen Aufnahmeparametern eine überlegene Bildqualität gegenüber herkömmlicher Computertomographie zu erzielen.

Weitere Ausführungsbeispiele ermöglichen die automatische Bahnplanung für komplexe Aufnahmesysteme, sodass neben der optimalen Bildqualität ebenso Beschränkungen durch das Aufnahmesystem wie Zugänglichkeit, Präzision oder Geschwindigkeit berücksichtigt werden.

Das Verfahren gemäß obigen Ausführungsbeispielen ist insbesondere relevant für die Computertomographie von großen und/oder komplex geformten Bauteilen beispielsweise aus Automobilbau, Luft- und Raumfahrt mit neuen Aufnahmesystemen mit einer hohen Zahl an Freiheitsgraden in einem großen Arbeitsraum wie beispielsweise Roboterbasierter Computertomographie.

Das Verfahren kann beitragen, schnelle produktionsintegrierte Inline Computertomographie zu beschleunigen und somit den Takt und die Effizienz der Prüfung zu erhöhen.

Ebenso kann das Verfahren generell bei Computertomographie zu einer Steigerung der Bildqualität beitragen und somit zu zuverlässigerer Darstellung feinerer Strukturen führen.

Die Übertragung des Verfahrens in die medizinische Anwendung ist möglich um auch dort zu gesteigerter Bildqualität und zu reduzierter Dosisbelastung für den Patienten beizutragen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

**Patentansprüche**

1. Berechnungseinheit (10, 10', 10") zur Berechnung einer Aufnahmetrajektorie eines CT-Systems, mit folgenden Merkmalen:

    einer Empfangsschnittstelle (12) zum Empfangen von Mess- und/oder Simulationsdaten bezüglich des aufzunehmenden Objekts;
    einem Optimierer (20, 20'), der ausgebildet ist, um ausgehend von bekannten Freiheitsgraden des CT-Systems, ausgehend von den Mess- und/oder Simulationsdaten und ausgehend von einer Prüfaufgabe aus einer Gruppe, umfassend eine Mehrzahl von Prüfaufgaben, die Aufnahmetrajektorie zu bestimmen; und
    eine Steuereinheit (14), die ausgebildet ist, um Daten entsprechend der berechneten Aufnahmetrajektorie zur Steuerung einer Manipulationseinheit des CT-Systems auszugeben und dadurch das CT-System in Entsprechung der berechneten Aufnahmetrajektorie zu steuern;
    wobei die Gruppe umfassend eine Mehrzahl von Prüfaufgaben die Prüfaufgabe des Ermittelns einer geometrischen Struktur und/oder geometrischen Oberflächenstruktur umfasst;
    wobei die Gruppe der Prüfaufgaben die Detektion von Eigenschaften der Materialien über das Volumen des aufzunehmenden Objekts umfasst;
    wobei die Gruppe der Prüfaufgaben das Ermitteln von Abweichungen im Volumen des aufzunehmenden Objekts umfasst;
    wobei der Optimierer (20, 20') ausgebildet ist, je Position auf der Aufnahmetrajektorie die Aufnahmeparameter vorzugeben.

2. Berechnungseinheit (10, 10', 10") gemäß Anspruch 1, wobei der Optimierer (20, 20') ausgebildet ist, die Aufnahmeparameter zwischen zwei Positionen auf der Aufnahmetrajektorie zu variieren; und wobei die Aufnahmeparameter Belichtungszeit, Röntgenspannung, Röntgenstrom und/oder Filterung umfassen.

3. Berechnungseinheit (10, 10', 10") gemäß Anspruch 1, wobei der Optimierer (20, 20') ausgebildet ist, je Position auf der Aufnahmetrajektorie die Aufnahmeparameter vorzugeben und wobei die Aufnahmeparameter aus einer Gruppe, die Belichtungszeit, Röntgenspannung, Röntgenstrom und/oder Filterung umfasst, zwischen zwei Positionen auf der Aufnahmetrajektorie variieren können.

4. Berechnungseinheit (10, 10', 10") gemäß einem der vorherigen Ansprüche, wobei die Mess- und/oder Simulationsdaten ein während einer Messung generiertes, optimales Modell oder während einer Messung generiertes, nicht optimales Modell, ein Geometriemodell und/oder Volumenmodell umfassen.

5. Berechnungseinheit (10, 10', 10") gemäß einem der vorherigen Ansprüche, wobei die Mess- und/oder Simulationsdaten während der Aufnahme des aufzunehmenden Objekts mit dem CT-System ermittelt sind; oder

wobei die Mess- und/oder Simulationsdaten während der Aufnahme des aufzunehmenden Objekts mit dem CT-System ermittelt sind, wobei die Mess- und/oder Simulationsdaten Zwischenbilder und/oder von der Bildverarbeitung (42') ausgegebene Interimsdaten umfassen; oder
wobei die Mess- und/oder Simulationsdaten während der Aufnahme des aufzunehmenden Objekts mit dem CT-System ermittelt sind, wobei die Mess- und/oder Simulationsdaten ein von der Bildverarbeitung (42') entsprechend der Prüfaufgabe berechnetes Datenobjekt umfassen.

6. Berechnungseinheit (10, 10', 10") gemäß einem der vorherigen Ansprüche, wobei die Berechnungseinheit eine Benutzerschnittstelle (16) aufweist, über welche die Prüfaufgabe gewählt wird.

7. Berechnungseinheit (10, 10', 10") gemäß einem der vorherigen Ansprüche, wobei bei der Prüfaufgabe des Ermittelns einer geometrischen Struktur und/oder geometrischen Oberflächenstruktur die Positionen auf der Aufnahmetrajektorie so gewählt sind, dass hochfrequente Merkmale des aufzunehmenden Objekts und/oder Gradienten bei der Aufnahme des aufzunehmenden Objekts detektierbar sind.

8. Berechnungseinheit (10, 10', 10") gemäß einem der vorherigen Ansprüche, wobei bei der Detektion von Eigenschaften der Materialien die Positionen der Aufnahmetrajektorien so gewählt sind, dass in den Aufnahmen Schwächungskoeffizienten, die Dichte und/oder Art der Materialien im Volumen des aufzunehmenden Objekts detektierbar sind.

9. Berechnungseinheit (10, 10', 10") gemäß einem der vorherigen Ansprüche, wobei bei dem Ermitteln von Abweichungen die Positionen auf der Aufnahmetrajektorie so gewählt sind, dass in den Aufnahmen lokale Variationen in Schwächungskoeffizienten detektierbar sind.

10. Berechnungseinheit (10, 10', 10") gemäß einem der vorherigen Ansprüche, wobei jede weitere Position auf der Aufnahmetrajektorie so gewählt ist, dass eine sukzessive Verbesserung des aufzunehmenden Bilds erreicht wird; und/oder
wobei die Positionen auf der Aufnahmetrajektorie mit veränderlicher Vergrößerung und/oder mit kleiner werdendem Abstand zwischen dem aufzunehmenden Objekt und Bilderfassungsmitteln gewählt sind.

11. Berechnungseinheit (10, 10', 10") gemäß einem der vorherigen Ansprüche, wobei der Optimierer (20, 20') ausgebildet ist, die Positionen auf der Aufnahmetrajektorie so zu wählen, dass eine Kollision zwischen den Aufnahmemitteln und dem aufzunehmenden Objekt verhindert wird; und/oder
wobei die Positionen der Aufnahmetrajektorie so gewählt sind, dass eine Kollision zwischen den Aufnahmemitteln und der Umgebung des aufzunehmenden Objekts verhindert wird.

12. Berechnungseinheit (10, 10', 10") gemäß einem der vorherigen Ansprüche, wobei der Optimierer (20, 20') für jede Position auf der Aufnahmetrajektorie Korrekturdaten aus einem Satz von gespeicherten Korrekturdaten ermittelt oder ausgehend von den gespeicherten Korrekturdaten für benachbarte Positionen berichtigte Korrekturdaten berechnet; und/oder
wobei der Optimierer (20, 20') für die gewählten Aufnahmeparameter Korrekturdaten aus einem Speicher ermittelt oder ausgehend von den gespeicherten Korrekturdaten für ähnliche Parameter berichtigte Korrekturdaten berechnet.

13. Computertomographie-System (80) mit einer Berechnungseinheit (10, 10', 10") gemäß einem der vorherigen Ansprüche.

14. Verfahren (100) zur Berechnung einer Aufnahmetrajektorie eines Computertomographie-Systems, mit folgenden Schritten:

Empfangen (110) von Mess- und/oder Simulationsdaten bezüglich des aufzunehmenden Objekts;
mittels eines Optimierers (20, 20') Bestimmen (120) der Aufnahmetrajektorie ausgehend von bekannten Freiheitsgraden des CT-Systems, ausgehend von den Mess- und/oder Simulationsdaten und ausgehend von einer Prüfaufgabe aus einer Gruppe, umfassend eine Mehrzahl von Prüfaufgaben, und

Ausgeben (130) von Daten entsprechend der berechneten Aufnahmetrajektorie zur Steuerung einer Manipulationseinheit des Computertomographie-Systems, um das CT-System in Entsprechung der berechneten Aufnahmetrajektorie zu steuern;

wobei die Gruppe umfassend eine Mehrzahl von Prüfaufgaben die Prüfaufgabe des Ermittelns einer geometrischen Struktur und/oder geometrischen Oberflächenstruktur umfasst;

wobei die Gruppe der Prüfaufgaben die Detektion von Eigenschaften der Materialien über das Volumen des aufzunehmenden Objekts umfasst;

wobei die Gruppe der Prüfaufgaben das Ermitteln von Abweichungen im Volumen des aufzunehmenden Objekts umfasst;

wobei der Optimierer (20, 20') ausgebildet ist, je Position auf der Aufnahmetrajektorie die Aufnahmeparameter vorzugeben.

15. Verfahren (100) gemäß Anspruch 14, wobei je Position auf der Aufnahmetrajektorie die Aufnahmeparameter vorgegeben werden und wobei die Aufnahmeparameter aus einer Gruppe, die Belichtungszeit, Röntgenspannung, Röntgenstrom und/oder Filterung umfasst, zwischen zwei Positionen auf der Aufnahmetrajektorie variieren.

16. Computerprogramm, umfassend einen Programmcode, wobei der Programmcode dahin gehend wirksam ist, das Verfahren nach Anspruch 14 oder 15 durchzuführen, wenn das Computerprogramm auf einem Computer für ein CT-System abläuft.

**Claims**

1. A calculating unit (10, 10', 10") for calculating a recording trajectory of a CT system, comprising:

a receive interface (12) for receiving measurement and/or simulation data relative to the object to be recorded;
an optimizer (20, 20') configured to determine the recording trajectory based on known degrees of freedom of the CT system, based on the measurement and/or simulation data and based on a test task from a group comprising a plurality of test tasks; and
a control unit (14) configured to output data in correspondence with the calculated recording trajectory for controlling a manipulation unit of the CT system and thereby control the CT system in correspondence with the calculated recording trajectory;
wherein the group comprising a plurality of test tasks comprises the test task of establishing a geometrical structure and/or geometrical surface structure;
wherein the group of test tasks comprises detecting characteristics of the materials using the volume of the object to be recorded;
wherein the group of test tasks comprises establishing deviations in the volume of the object to be recorded;
wherein the optimizer (20, 20') is configured to predetermine the recording parameters per position on the recording trajectory.

2. The calculating unit (10, 10', 10") in accordance with claim 1, wherein the optimizer (20, 20') is configured to vary the recording parameters between two positions on the recording trajectory; and
wherein the recording parameters comprise exposure time, x-ray voltage, x-ray current and/or filtering.

3. The calculating unit (10, 10', 10") in accordance with claim 1, wherein the optimizer (20, 20') is configured to predetermine the recording parameters per position on the recording trajectory, and wherein the recording parameters of a group comprising exposure time, x-ray voltage, x-ray current and/or filtering can vary between two positions on the recording trajectory.

4. The calculating unit (10, 10', 10") in accordance with any of the preceding claims, wherein the measurement and/or simulation data comprise an optimum model generated during a measurement or a non-optimum model generated during a measurement, a geometry model and/or a volume model.

5. The calculating unit (10, 10', 10") in accordance with any of the preceding claims, wherein the measurement and/or simulation data are taken when recording the object to be recorded using the CT system; or

wherein the measurement and/or simulation data are taken when recording the object to be recorded using the CT system, wherein the measurement and/or simulation data comprise intermediate images and/or interim data output by image processing (42'); or
wherein the measurement and/or simulation data are taken when recording the object to be recorded using the CT system, wherein the measurement and/or simulation data comprise a data object calculated by the image processing (42') in correspondence with the test task.

6. The calculating unit (10, 10', 10") in accordance with any of the preceding claims, wherein the calculating unit comprises a user interface (16) using which the test task is selected.

7. The calculating unit (10, 10', 10") in accordance with any of the preceding claims, wherein in the test task of establishing a geometrical structure and/or geometrical surface structure, the positions on the recording trajectory are selected such that high-frequency features of the object to be recorded and/or gradients are detectable when recording the object to be recorded.

8. The calculating unit (10, 10', 10") in accordance with any of the preceding claims, wherein, when detecting characteristics of the materials, the positions of the recording trajectories are selected such that attenuation coefficients, the density and/or type of the materials in the volume of the object to be recorded are detectable in the recordings.

9. The calculating unit (10, 10', 10") in accordance with any of the preceding claims, wherein, when establishing deviations, the positions on the recording trajectory are selected such that local variations in attenuation coefficients are detectable in the recordings.

10. The calculating unit (10, 10', 10") in accordance with any of the preceding claims, wherein every further position on the recording trajectory is selected such that a successive improvement of the image to be recorded is achieved; and/or
wherein the positions on the recording trajectory are selected with a variable magnification and/or decreasing distance between the object to be recorded and the image detection means.

11. The calculating unit (10, 10', 10") in accordance with any of the preceding claims, wherein the optimizer (20, 20') is configured to select the positions on the recording trajectory such that a collision between the recording means and the object to be recorded is prevented; and/or
wherein the positions of the recording trajectory are selected such that a collision between the recording means and the surroundings of the object to be recorded is prevented.

12. The calculating unit (10, 10', 10") in accordance with any of the preceding claims, wherein the optimizer (20, 20') establishes correction data from a set of stored correction data for each position on the recording trajectory or calculates corrected correction data based on the stored correction data for neighboring positions; and/or wherein the optimizer (20, 20') establishes correction data from a memory for the recording parameters selected or calculates corrected correction data based on the correction data stored for similar parameters.

13. A computer tomography system (80) comprising a calculating unit (10, 10', 10") in accordance with any of the preceding claims.

14. A method (100) for calculating a recording trajectory of a computer tomography system, comprising the steps of:

receiving (110) measurement and/or simulation data relative to the object to be recorded;
by means of an optimizer (20, 20'), determining (120) the recording trajectory based on known degrees of freedom of the CT system, based on the measurement and/or simulation data and based on a test task from a group comprising a plurality of test tasks, and
outputting (130) data in correspondence with the calculated recording trajectory for controlling a manipulation unit of the computer tomography system, to control the CT system in correspondence with the calculated recording trajectory;
wherein the group comprising a plurality of test tasks comprises the test task of establishing a geometrical structure and/or geometrical surface structure;
wherein the group of test tasks comprises detecting characteristics of the materials using the volume of the object to be recorded;
wherein the group of test tasks comprises establishing deviations in the volume of the object to be recorded;
wherein the optimizer (20, 20') is configured to predetermine the recording parameters per position on the recording trajectory.

15. The method (100) in accordance with claim 14, wherein the recording parameters are predetermined per position on the recording trajectory and wherein the recording parameters of a group comprising exposure time, x-ray voltage, x-ray current and/or filtering vary between two positions on the recording trajectory.

16. A computer program including a program code, wherein the program code is effective to perform the method in accordance with claim 14 or 15 when the computer program runs on a computer for a CT system.

**Revendications**

1. Unité de calcul (10, 10', 10") pour calculer une trajectoire d'enregistrement d'un système de tomodensitométrie, aux caractéristiques suivantes :

une interface de réception (12) destinée à recevoir les données de mesure et/ou de simulation relatives à l'objet à enregistrer ;

un optimiseur (20, 20') qui est conçu pour déterminer la trajectoire d'enregistrement en partant des degrés de liberté connus du système de tomodensitométrie, en partant des données de mesure et/ou de simulation et en partant d'une tâche de vérification parmi un groupe comprenant une pluralité de tâches de vérification; et

une unité de commande (14) qui est conçue pour sortir des données correspondant à la trajectoire d'enregistrement calculée pour commander une unité de manipulation du système de tomodensitométrie et pour commander de ce fait le système de tomodensitométrie conformément à la trajectoire d'enregistrement calculée; dans laquelle le groupe comprenant une pluralité de tâches de vérification comporte la tâche de vérification consistant à déterminer une structure géométrique et/ou une structure de surface géométrique;

dans laquelle le groupe de tâches de vérification comporte le fait de détecter les propriétés des matériaux sur le volume de l'objet à enregistrer;

dans laquelle le groupe de tâches de vérification comporte le fait de déterminer les écarts dans le volume de l'objet à enregistrer;

dans laquelle l'optimiseur (20, 20') est conçu pour spécifier les paramètres d'enregistrement par position sur la trajectoire d'enregistrement.

2. Unité de calcul (10, 10', 10") selon la revendication 1, dans laquelle l'optimiseur (20, 20') est conçu pour faire varier les paramètres d'enregistrement entre deux positions sur la trajectoire d'enregistrement; et dans laquelle les paramètres d'enregistrement comportent le temps d'exposition, la tension des rayons X, le flux des rayons X et/ou le filtrage.

3. Unité de calcul (10, 10', 10") selon la revendication 1, dans laquelle l'optimiseur (20, 20') est conçu pour spécifier les paramètres d'enregistrement par position sur la trajectoire d'enregistrement et dans laquelle les paramètres d'enregistrement d'un groupe qui comporte le temps d'exposition, la tension des rayons X, le flux des rayons X et/ou le filtrage peuvent varier entre deux positions sur la trajectoire d'enregistrement.

4. Unité de calcul (10, 10', 10") selon l'une des revendications précédentes, dans laquelle les données de mesure et/ou de simulation comportent un modèle optimal généré pendant une mesure ou un modèle non optimal généré pendant une mesure, un modèle de géométrie et/ou un modèle de volume.

5. Unité de calcul (10, 10', 10") selon l'une des revendications précédentes, dans laquelle les données de mesure et/ou de simulation sont déterminées pendant l'enregistrement de l'objet à enregistrer par le système de tomodensitométrie; ou

dans laquelle les données de mesure et/ou de simulation sont déterminées pendant l'enregistrement de l'objet à enregistrer par le système de tomodensitométrie, dans laquelle les données de mesure et/ou de simulation comportent des images intermédiaires et/ou des données intérimaires émises par le traitement d'image (42'); ou

dans laquelle les données de mesure et/ou de simulation sont déterminées pendant l'enregistrement de l'objet à enregistrer par le système de tomodensitométrie, dans laquelle les données de mesure et/ou de simulation comportent un objet de données calculé par le traitement d'image (42') conformément à la tâche de vérification.

6. Unité de calcul (10, 10', 10") selon l'une des revendications précédentes, dans laquelle l'unité de calcul présente une interface d'utilisateur (16) par l'intermédiaire de laquelle est sélectionnée la tâche de vérification.

7. Unité de calcul (10, 10', 10") selon l'une des revendications précédentes, dans laquelle, lors de la tâche de vérification consistant à déterminer une structure géométrique et/ou une structure géométrique de surface, les positions sur la trajectoire d'enregistrement sont sélectionnées de sorte que puissent être détectés les caractéristiques de haute fréquence de l'objet à enregistrer et/ou les gradients lors de l'enregistrement de l'objet à enregistrer.

8. Unité de calcul (10, 10', 10") selon l'une des revendications précédentes, dans laquelle, lors de la détection des propriétés des matériaux, les positions des trajectoires d'enregistrement sont sélectionnées de sorte que puissent être détectés, dans les enregistrements, les coefficients d'atténuation, la densité et/ou la nature des matériaux dans le volume de l'objet à enregistrer.

9. Unité de calcul (10, 10', 10") selon l'une des revendications précédentes, dans laquelle, lors de la détermination des écarts, les positions sur la trajectoire d'enregistrement sont sélectionnées de sorte que puissent être détectées, dans les enregistrements, les variations locales des coefficients d'atténuation.

10. Unité de calcul (10, 10', 10") selon l'une des revendications précédentes, dans laquelle chaque autre position sur la trajectoire d'enregistrement est sélectionnée de sorte que puisse être obtenue une amélioration successive de l'image à enregistrer; et/ou dans laquelle les positions sur la trajectoire d'enregistrement sont sélectionnées avec un agrandissement variable et/ou avec une distance décroissante entre l'objet à enregistrer et les moyens de capture d'image.

11. Unité de calcul (10, 10', 10") selon l'une des revendications précédentes, dans laquelle l'optimiseur (20, 20') est conçu pour sélectionner les positions sur la trajectoire d'enregistrement de sorte que soit empêchée une collision entre les moyens d'enregistrement et l'objet à enregistrer; et/ou dans laquelle les positions de la trajectoire d'enregistrement sont sélectionnées de sorte que soit empêchée une collision entre les moyens d'enregistrement et l'environnement de l'objet à enregistrer.

12. Unité de calcul (10, 10', 10") selon l'une des revendications précédentes, dans laquelle l'optimiseur (20, 20') détermine, pour chaque position sur la trajectoire d'enregistrement, les données de correction parmi un ensemble de données de correction mémorisées, ou calcule, en partant des données de correction mémorisées pour les positions voisines, les données de correction corrigées; et/ou dans lequel l'optimiseur (20, 20') détermine, pour les paramètres d'enregistrement sélectionnés, les données de correction à partir d'une mémoire, ou calcule, en partant des données de correction mémorisées pour des paramètres similaires, les données de correction corrigées.

13. Système de tomodensitométrie (80) avec une unité de calcul (10, 10', 10") selon l'une des revendications précédentes.

14. Procédé (100) de calcul d'une trajectoire d'enregistrement d'un système de tomodensitométrie, aux étapes suivantes consistant à:

recevoir (110) les données de mesure et/ou de simulation relatives à l'objet à enregistrer;
au moyen d'un optimiseur (20, 20'), déterminer (120) la trajectoire d'enregistrement en partant des degrés de liberté connus du système de tomodensitométrie, en partant des données de mesure et/ou de simulation et en partant d'une tâche de vérification parmi un groupe comportant une pluralité des tâches de vérification, et sortir (130) les données correspondant à la trajectoire d'enregistrement calculée pour commander une unité de manipulation du système de tomodensitométrie, pour commander de ce fait le système de tomodensitométrie conformément à la trajectoire d'enregistrement calculée; dans lequel le groupe comportant une pluralité de tâches de vérification comporte la tâche de vérification consistant à déterminer une structure géométrique et/ou une structure de surface géométrique;
dans lequel le groupe de tâches de vérification comporte le fait de détecter les propriétés des matériaux sur le volume de l'objet à enregistrer;
dans lequel le groupe de tâches de vérification comporte le fait de déterminer les écarts dans le volume de l'objet à enregistrer;
dans lequel l'optimiseur (20, 20') est conçu pour spécifier les paramètres d'enregistrement par position sur la trajectoire d'enregistrement.

15. Procédé (100) selon la revendication 14, dans lequel les paramètres d'enregistrement sont spécifiés par position sur la trajectoire d'enregistrement et dans lequel les paramètres d'enregistrement parmi un groupe qui comporte le temps d'exposition, la tension des rayons X, le flux des rayons X et/ou le filtrage varie entre deux positions sur la trajectoire d'enregistrement.

16. Programme d'ordinateur comportant un code de programme, dans lequel le code de programme est efficace pour mettre en oeuvre le procédé selon la revendication 14 ou 15 lorsque le programme d'ordinateur est exécuté sur un ordinateur pour un système de tomodensitométrie.

F1, F2, F3, ...

12  16  14  20  10  30  32  32'

EP 3 488 232 B1

Fig. 1a

100

110

120

130

Fig. 1b

Fig. 1c

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREAS FISCHER et al.** CT Rekonstruktion mit Objektspezifischen Erweiterten Trajektorien. *DACH-Jahrestagung 2015,* 10. Mai 2015